# EUROPÄISCHE PATENTSCHRIFT

(11) **EP 2 303 774 B1**
(45) Veröffentlichungstag und Bekanntmachung des Hinweises auf die Patenterteilung: **14.06.2017**
(21) Anmeldenummer: 09777180.2
(22) Anmeldetag: 14.07.2009
(51) Int. Cl.: C01B 32/00, H01M 4/38, H01M 4/04, H01M 4/08, H01M 4/58, H01M 4/134, H01M 4/1395, H01M 4/133, H01M 4/587, H01M 4/1393, H01M 10/0525

(54) **EINLAGERUNG VON SILIZIUM UND/ODER ZINN IN PORÖSE KOHLENSTOFFSUBSTRATE**
INTERCALATION OF SILICON AND/OR TIN INTO POROUS CARBON SUBSTRATES
INSERTION DE SILICIUM ET/OU D'ÉTAIN DANS DES SUBSTRATS CARBONÉS POREUX

(30) Priorität: 15.07.2008 DE 102008033097; 30.08.2008 DE 102008045231
(43) Veröffentlichungstag der Anmeldung: 06.04.2011
(73) Patentinhaber: Universität Duisburg-Essen, 45141 Essen (DE)
(72) Erfinder: SCHULZ, Christof, 50672 Köln (DE); WIGGERS, Hartmut, 48734 Reken (DE)
(74) Vertreter: Von Rohr Patentanwälte Partnerschaft mbB
(86) Internationale Anmeldenummer: PCT/EP2009/005110
(87) Internationale Veröffentlichungsnummer: WO 2010/006763

(56) Entgegenhaltungen:
- YANG J ET AL: "SI/C COMPOSITES FOR HIGH CAPACITY LITHIUM STORAGE MATERIALS" ELECTROCHEMICAL AND SOLID-STATE LETTERS, IEEE SERVICE CENTER, PISCATAWAY, NJ, US, Bd. 6, Nr. 8, 1. August 2003 (2003-08-01), Seiten A154-A156, XP001172416 ISSN: 1099-0062
- JUNG ET AL: "Si-carbon core-shell composite anode in lithium secondary batteries" ELECTROCHIMICA ACTA, ELSEVIER SCIENCE PUBLISHERS, BARKING, GB, Bd. 52, Nr. 24, 9. Juli 2007 (2007-07-09), Seiten 7061-7067, XP022145577 ISSN: 0013-4686
- Y.S. JUNG ET AL: "Sn-carbon core-shell powder for anode in Lithium Secondary Batteries" JOURNAL OF THE ELECTROCHEMICAL SOCIETY, Bd. 152, Nr. 7, 16. Juni 2005 (2005-06-16), Seiten A1452-A1457, XP002547534
- KIM I-S ET AL: "High capacity Si/C nanocomposite anodes for Li-ion batteries" JOURNAL OF POWER SOURCES, ELSEVIER SA, CH, Bd. 136, Nr. 1, 10. September 2004 (2004-09-10), Seiten 145-149, XP004544525 ISSN: 0378-7753 in der Anmeldung erwähnt

## Beschreibung

Die vorliegende Erfindung betrifft das Gebiet der Lithium-Ionenbatterientechnologie, insbesondere diesbezüglich geeignete Anodenmaterialien und ihre Herstellung.

Insbesondere betrifft die vorliegende Erfindung ein Kohlenstoffmaterial und dessen Verwendung, insbesondere für die Herstellung von Anodenmaterialien, bevorzugt für Lithium-Ionenbatterien.

Des weiteren betrifft die vorliegende Erfindung Anodenmaterialien, welche das erfindungsgemäße Kohlenstoffmaterial enthalten bzw. unter Verwendung des erfindungsgemäßen Kohlenstoffmaterials hergestellt sind, sowie Batterien, insbesondere Lithium-Ionenbatterien, welche diese Anodenmaterialien umfassen.

Lithium-Ionenbatterien zeichnen sich durch sehr hohe Energiedichten aus. Sie sind thermisch stabil, liefern über den Entladezeitraum eine konstante Spannung und kennen keinen sogenannten Memory-Effekt. Derartige Batterien sind im Stand der Technik sowohl in Form von herkömmlichen Batterien für den einmaligen Gebrauch als auch in Form von wiederaufladbaren Akkumulatoren bekannt.

Lithium-Ionenbatterien erzeugen die elektromotorische Kraft durch die Verschiebung von Lithium-Ionen. Beim Ladevorgang wandern positiv geladene Lithium-Ionen durch einen Elektrolyten hindurch von einer Kathode zwischen die Graphitebenen einer Anode, während der Ladestrom die Elektronen über den äußeren Stromkreis liefert, wobei die Ionen mit dem Graphit eine Interkalationsverbindung des Typs LiₓnC bilden. Beim Entladen wandern die LithiumIonen zurück, und die Elektronen können über den äußeren Stromkreis zur Kathode fließen.

Der Begriff der Interkalation bezeichnet im Sinne der vorliegenden Erfindung die Einlagerung einer beweglichen Gastspezies in ein Wirtsgitter ohne Zerstörung des Bauprinzips der Wirtssubstanz bzw. des Wirtsgitters. Die Wirtsgitter weisen dabei z. B. Schicht-, Röhren- oder Käfigstrukturen auf, in denen die Gastsubstanzen in ein-, zwei- oder dreidimensionaler Anordnung, häufig unter Volumenexpansion, eingelagert werden können. Die Interkalation von Ionen ist mit einer Oxidation bzw. Reduktion des Wirtsgitters verbunden. Bei einer elektrochemischen Interkalation wird ein elektronisch leitender Wirt als Elektrode in einem Elektrolyten anodisch oder kathodisch polarisiert, wodurch Anionen bzw. Kationen, gegebenenfalls solvatisiert, aus dem Elektrolyten in das Wirtsgitter übertreten. Durch diese Elektronen/Ionen-Transferreaktion entsteht ein Mischleiter mit meist besserer elektronischer Leitfähigkeit als das Ausgangsmaterial. Elektrochemische Interkalationsreaktionen sind in der Regel reversibel, und die Beweglichkeit der Gastionen ist insbesondere in Wirtsgittern mit Schichtstruktur hoch. Eine so erfolgte Interkalation schließt drei prinzipielle Schritte ein: Diffusion oder Migration von meist solvatisierten Ionen zur elektrochemischen Doppelschicht des Wirtsgitters, mögliche Desolvatation und nachfolgender Übergang der Ionen in freie Gitterplätze nahe der Oberflächenregion des Wirtes und schließlich Diffusion der Ionen in das Innere des Gitters.

Das Konzept der Interkalationselektroden für elektrochemische Stromquellen hat spätestens seit der rasanten Entwicklung der wiederaufladbaren Lithiumzellen wieder großes Interesse gefunden. Interkalationselektroden sind seit den 1970er Jahren für Anwendungen in organischen und wäßrigen Elektrolytlösungen vielfach untersucht worden. Auch in anderen, schon lange Zeit bekannten galvanischen Elementen, z. B. dem Zn/MnO₂-Element und dem Bleiakkumulator, verläuft die Reduktion der kathodischen Oxide über die Einlagerung eines Protons in MnO₂ bzw. PbO₂.

Der wirkliche Durchbruch der wiederaufladbaren Lithiumbatterie wurde erst mit der Markteinführung einer Zelle erreicht, welche gänzlich auf metallisches Lithium als Anodenmaterial verzichtet, nämlich die Lithium-Ionenzelle. Anstelle des metallischen Lithiums werden Lithiumionen-Einlagerungsverbindungen, wie lamellare Kohlenstoffe, Übergangsmetalloxide oder mit Lithium legierende Metalle, als negative Aktivmassen eingesetzt, welche reversibel Lithiumionen aufnehmen und abgeben können. Die positiven Lithium-Ionenladungen werden durch Elektronenaufnahme oder -abgabe des Wirtsmaterials neutralisiert. Im Vergleich zu metallischem Lithium liegen die theoretischen Werte für die spezifische Ladung bei der Verwendung eines inaktiven Wirtsmaterials meist beträchtlich tiefer.

Da die Lithium-Aktivität in den Einlagerungsverbindungen - häufig auch Insertions- oder Interkalationsverbindungen genannt - kleiner als die des metallischen Lithiums, d. h. also kleiner als 1 ist, wird auch das Elektrodenpotential je nach Ladungszustand zu weniger negativer Werten verschoben. In Lithiumionen-Einlagerungsverbindungen liegen allerdings anstatt Lithiumatomen die sehr viel kleineren Lithiumionen vor.

Voraussetzung für die Interkalation der Lithium-Ionen in eine Wirtsgittermatrix ist, daß die Wirtsgittermatrix nicht nur sterisch, sondern auch elektronisch die Aufnahme von Gast-Ionen ermöglichen kann, d. h. über eine entsprechende Struktur der Energiebänder verfügt.

Das aktive Material der Anode einer gängigen Lithium-Ionenbatterie besteht beispielsweise aus Graphit. Die Kathode enthält z. B. Lithium-Metalloxide in Schichtstruktur, wie Lithiumcobaltoxid, Lithiumnickeloxid oder den Spinell LiMn₂O₄. Lithium-Ionenbatterien müssen komplett wasserfrei sein, da sonst das Wasser mit dem Leitsalz (z. B. LiPF₆) zu Flußsäure (HF) reagieren kann. Meist wählt man daher eine Mischung von wasserfreien, aprotischen Lösungsmitteln.

Wie zuvor erwähnt, kennen Lithium-Ionenbatterien keinen sogenannten Memory-Effekt und zeigen darüber hinaus keine bzw. eine nur äußerst geringe Selbstentladung. Lithium-Ionenbatterien können tragbare elektronische Geräte mit hohem Energiebedarf versorgen, für welche herkömmliche Bleiakkumulatoren zu schwer oder zu groß wären, wie beispielsweise Mobiltelefone, Digitalkameras, Camcorder oder Laptops sowie Elektro- und Hybridfahrzeuge. Auch im Modellbausektor und in Elektrowerkzeugen haben sie sich bereits etabliert. Die nutzbare Lebensdauer von Lithium-Ionenakkumulatoren beträgt beispielsweise mehrere Jahre, was allerdings stark von der Nutzung und den Lagerungsbedingungen abhängig ist.

Aufgrund der zuvor geschilderten positiven Eigenschaften von Lithium-Ionenbatterien einschließlich Lithium-Ionenakkumulatoren hat es im Stand der Technik nicht an Versuchen gefehlt, die diesbezügliche Technologie weiter zu entwickeln.

Aus dem Stand der Technik ist es bekannt, Silizium, insbesondere in partikulärer Form, in eine Kohlenstoff- oder Graphitmatrix einzumischen oder anderweitig einzubringen, so beispielsweise durch Gasphasenabscheidung oder dergleichen (vgl. hierzu z. B, auch die Druckschriften WO 2005/096414 A2, DE 10 2005 011 940 A1, DE 103 53 996 A1, DE 103 53 995 A1 und DE 10 2006 010 862 A1). Denn es ist dem Fachmann grundsätzlich bekannt, daß im Rahmen von Lithium-Ionenbatterien das Silizium durch während der Lade-und Entladevorgänge auftretende Volumenkontraktion und -expansion mechanisch degradiert und amorphisiert und schließlich durch zusehends schlechtere elektrische Kontaktierung und Zerstörung nicht mehr zur Speicherung von Lithium zur Verfügung steht. Durch das Einbetten des Siliziums in eine Kohlenstoff-oder Graphitmatrix wird vor allem der zunehmend schlechteren elektrischen Kontaktierung entgegengewirkt.

N. Dimovet et al., Journal of Power Sources 136 (2004), Seiten 108 ff., beschreiben ein Verfahren zum mechanischen Mischen von etwa 1 µm großen Siliziumpartikeln mit natürlichem und synthetischem Graphit.

Kim et al., Journal of Power Sources 136 (2004), Seiten 145 ff., beschreiben ein Verfahren zum mechanischen Mischen von Siliziumnanopartikeln mit Polystyrol.

Kwon et al., Chem. Commun., 2008, Seiten 1109 ff., beschreiben ein Verfahren zum Beschichten von Si₇₀Sn₃₀-Nanolegierungen mit Kohlenstoff.

In der WO 2005/096414 A2 ist ein Elektrodenmaterial beschrieben, welches durch mechanisches Mischen von Partikeln, Ruß und Graphit hergestellt wird.

Eine Übersicht über den Stand der Technik läßt sich beispielsweise bei Kasavajjula et al., Journal of Power Sources 163 (2007), Seiten 1003 ff., finden.

Alle im Stand der Technik bekannten Verfahren diskutieren aber nur elektrische Eigenschaften oder Kapazitäten der Materialien; die mechanischen Eigenschaften des Pulvers, insbesondere bezüglich der Verfügbarkeit des Ausdehnungsvolumens für das Silizium, werden jedoch nicht oder allenfalls nur beiläufig diskutiert.

Die wissenschaftliche Publikation J. Yang, B.F. Wang, K. Wang, Y. Liu, J.Y. Xie und Z.S. Wen "Si/C Composites for High Capacity Lithium Storage Material" Electrochemical and Solid-State Letters 6 (8), A154-A156, 2003 betrifft die Herstellung von Silizium/Kohlenstoff-Kompositmaterialien zur Lithiumspeicherung, welche durch Pyrolyse von Polyvinylchlorid mit darin eingebettetem nanoskaligem Silizium erhalten werden.

Die wissenschaftliche Veröffentlichung Yoon Seok Yung, Kyu T. Lee und Seung M. Oh "Si-carbon core-shell composite anode in lithium secondary batteries" Electrochimica Acta 52, 7061-7067, 2007 betrifft Pulver aus Silizium/Kohlenstoff-Kompositmaterialien, deren einzelne Partikel eine Kern/Hülle-Struktur aufweisen, wobei der Kern aus Silizium und die Hülle aus Kohlenstoff besteht.

Weiterhin betrifft sie wissenschaftliche Veröffentlichung Yoon Seok Yung, Kyu T. Lee, Ji Heon Ryu, Dongmin Im und Seung M. Oh "Sn-Carbon Core-Shell Powder for Anode in Lithium Secondary Batteries" Journal of the Electrochemical Society 152 (7), A1452-A1457, 2005 Pulver aus Zinn/Kohlenstoff-Kompositmaterialien, deren einzelne Teilchen einen Kern/Hülle-Aufbau besitzen, wobei der Kern durch Zinn und die Hülle durch Kohlenstoff gebildet ist.

Schließlich betrifft die wissenschaftliche Publikation II-Seok Kim und Prashant N. Kumta "High capacity Si/C nanocomposite anodes for Li-ion batteries" Journal of Power Sources 136, 145-149, 2004 Silizium/Kohlenstoff-Nanokomposite, welche aus Silizium und Polystyrolharz durch mechanisches Hochenergiemahlen und anschließende Wärmebehandlung hergestellt werden.

Mit den im Stand der Technik als Anodenmaterialien für Lithium-Ionenbatterien vorgeschlagenen siliziumhaltigen Materialien sind jedoch eine Vielzahl von Nachteilen verbunden, von denen im folgenden nur einige Nachteile beispielhaft genannt sein sollen: Eine Vielzahl der im Stand der Technik vorgeschlagenen siliziumhaltigen Anodenmaterialien neigen infolge der während der Lade- und Entladevorgänge auftretenden Volumenkontraktion und -expansion zu einer mechanischen Degradierung und Amorphisierung, so daß letztendlich infolge einer mangelnden elektrischen Kontaktierung keine Speicherung von Lithium mehr stattfinden kann. Aufgrund der oft nur unzureichenden Porosität des Matrix- bzw. Wirtsgerüstes kommt es infolge der beim Ladevorgang auftretenden Volumenkontraktion auch oftmals zu einer irreversiblen Schädigung dieses Matrix- bzw. Wirtsgerüstes. Oftmals verfügen die im Stand der Technik bekannten Materialien nicht über ausreichende mechanische Eigenschaften, insbesondere nicht über entsprechende Festigkeiten.

Der vorliegenden Erfindung liegt daher die Aufgabe zugrunde, ein als Anodenmaterial für Lithium-Ionenbatterien geeignetes Material bereitzustellen, wobei die zuvor geschilderten Nachteile des Standes der Technik zumindest teilweise vermieden oder aber wenigstens abgeschwächt werden sollen.

Zur Lösung des zuvor geschilderten Problems schlägt die vorliegende Erfindung ein elektrisch leitfähiges, poröses silizium- und/oder zinnhaltiges Kohlenstoffmaterial nach Anspruch 1 vor. Gegenstand der vorliegenden Erfindung - gemäß einem **ersten** Aspekt der vorliegenden Erfindung - ist somit ein Material nach Anspruch 1; weitere, vorteilhafte Ausgestaltungen dieses Erfindungsaspekts sind Gegenstand der diesbezüglichen Unteransprüche.

Wiederum ein weiterer Gegenstand der vorliegenden Erfindung - gemäß einem **zweiten** Aspekt der vorliegenden Erfindung - ist die Verwendung des elektrisch leitfähigen, porösen silizium- und/oder zinnhaltigen Kohlenstoffmaterials gemäß Anspruch 6.

Des weiteren ist ein weiterer Gegenstand der vorliegenden Erfindung - gemäß einem **dritten** Aspekt der vorliegenden Erfindung - ein Anodenmaterial gemäß Anspruch 7; weitere, vorteilhafte Ausgestaltungen dieses Erfindungsaspekt sind Gegenstand der diesbezüglichen Unteransprüche.

Schließlich ist ein weiterer Gegenstand der vorliegenden Erfindung - gemäß einem **vierten** Aspekt der vorliegenden Erfindung - eine Batterie, insbesondere Lithium-Ionenbatterie, gemäß Anspruch 8.

Es versteht sich von selbst, daß nachfolgend solche Ausführungen, welche zur Vermeidung von Wiederholungen nur zu einem erfindungsgemäßen Aspekt gemacht werden, auch für die anderen Erfindungsaspekte entsprechend gelten, ohne daß dies ausdrücklich vermerkt oder hierauf hingewiesen ist.

Gleichermaßen versteht es sich von selbst, daß bei allen nachfolgend noch genannten (Zahlen-)Werten- und Bereichsangaben der Fachmann anwendungsbezogen oder einzelfallbedingt von den genannten (Zahlen-)Werten und Bereichen abweichen kann, ohne daß der Rahmen der vorliegenden Erfindung verlassen ist.

Gegenstand der vorliegenden Erfindung - gemäß einem **ersten** Aspekt der vorliegenden Erfindung - ist somit ein elektrisch leitfähiges, poröses silizium- und/oder zinnhaltiges Kohlenstoffmaterial, insbesondere für die Herstellung eines Anodenmaterials, bevorzugt für Lithium-Ionenbatterien, wobei das silizium- und/oder zinnhaltige Kohlenstoffmaterial in eine poröse Kohlenstoffmatrix eingelagerte Silizium-, Zinn- und/oder Silizium/Zinn-Nanopartikel enthält, wobei das Kohlenstoffmaterial eine Porosität, bestimmt als Gesamtporenvolumen nach Gurvich, im Bereich von 0,1 bis 0,3 cm³/g und eine BET-Oberfläche von 50 bis 200 m²/g aufweist.

Das erfindungsgemäße elektrisch leitfähige, poröse silizium- und/oder zinnhaltige Kohlenstoffmaterial ist insbesondere durch ein Verfahren erhältlich, bei welchem in einem ersten Verfahrensschritt Silizium-Nanopartikel und/oder Zinn-Nanopartikel und/oder Silizium/Zinn-Nanopartikel in eine Matrix auf Basis mindestens eines organischen Polymer eingebracht werden, insbesondere hierin dispergiert werden, und nachfolgend in einem zweiten Verfahrensschritt die auf diese Weise erhaltene, die Silizium-Nanopartikel und/oder Zinn-Nanopartikel und/oder Silizium/Zinn-Nanopartikel enthaltende Polymermatrix zu Kohlenstoff carbonisiert wird.

Vorzugsweise werden die Silizium-, Zinn- und/oder Silizium/Zinn-Nanopartikel homogen bzw. in gleichmäßiger Verteilung in die organische Polymermatrix eingebracht bzw. eingelagert bzw. dispergiert.

Mit den erfindungsgemäßen Materialien bzw. Produkten ist eine Vielzahl von Vorteilen verbunden, von denen nachfolgend nur einige Vorteile herausgestellt werden sollen:
Durch die Einlagerung des Siliziums und/oder Zinns in eine poröse Matrix auf Basis von Kohlenstoff wird bei Verwendung als Anodenmaterial insbesondere für Lithium-Ionenbattterien einer während der Lade- und Entladevorgänge durch Volumenkontraktion und -expansion auftretenden mechanischen Degradierung und Amorphisierung des kristallinen Siliziums und/oder Zinns wirksam entgegengewirkt, so daß die elektrische Leitfähigkeit, insbesondere die Fähigkeit zur Speicherung von Lithiumionen, erhalten bleibt.

Durch das Einbetten des Siliziums und/oder Zinns in eine poröse Kohlenstoffmatrix wird insbesondere auch einer Verschlechterung der elektrischen Kontaktierung entgegengewirkt. Die Verwendung von nanoskaligem Silizium und/oder Silizium ermöglicht es zudem, einer infolge von Volumenveränderungen auftretenden Zerstörung der Matrix in effizienter Weise entgegenzuwirken, da nanoskaliges Material diesbezüglich deutlich toleranter ist. Die Einbettung des nanoskaligen Siliziums und/oder Zinns in eine poröse bis hochporöse, aber mechanisch dennoch stabile Wirtsmatrix aus Kohlenstoff gewährleistet einerseits einen guten elektrischen Kontakt zwischen Silizium bzw. Zinn und Kohlenstoff, ermöglicht es aber andererseits dem Silizium bzw. Zinn auch, innerhalb dieser Matrix zu "atmen" (d. h. freie Volumenexpansion infolge Interkalation von Lithiumionen beim Ladevorgang), da auf Grund der hohen Porosität ausreichend Volumen zur Verfügung steht, ohne daß das Wirtsgerüst geschädigt wird.

Die erfindungsgemäßen Materialien verfügen zudem über ausgezeichnete mechanischen Eigenschaften, insbesondere bezüglich der Verfügbarkeit des Ausdehnungsvolumens für das Silizium und/oder Zinn, jedoch auch im Hinblick auf die mechanische Festigkeit für die Verwendung als Anodenmaterial.

Durch die Einlagerung der Silizium-, Zinn- und/oder Silizium/Zinn-Nanopartikel in die Polymermatrix, insbesondere mittels in-situ-Polymerisation in Gegenwart der Silizium-, Zinn- und/oder Silizium/Zinn-Nanopartikel, und die nachfolgende Carbonisierung (synonym auch als "Verkokung", "Pyrolyse", "Abbrand" oder dergleichen bezeichnet) wird einerseits ein mechanisch besonders stabiles System mit ausreichender Expansionsvolumen andererseits bereitgestellt, welches zudem über eine ausgezeichnete elektrische Leitfähigkeit infolge des ausgezeichneten elektrischen Kontakts zwischen Silizium bzw. Zinn und Kohlenstoff verfügt.

Die erfindungsgemäßen Produkte eignen sich aus den vorgenannten Gründen insbesondere zur Verwendung als silizium- und/oder zinnhaltige Anodenmaterialien, vorzugsweise für Lithium-Ionenbatterien einschließlich Akkumulatoren, da sie trotz der während der Lade- und Entladevorgänge auftretenden Volumenkontraktion und -expansion zu keiner bzw. keiner nennenswerten mechanischen Degradierung und Amorphisierung des Siliziums bzw. Zinns neigen und eine ausgezeichnete elektrische Kontaktierung, einhergehend mit einer exzellenten Fähigkeit zur Speicherung von Lithiumionen, erhalten bleibt. Aufgrund der hinreichenden Porosität des Matrix- bzw. Wirtsgerüstes kommt es infolge der beim Ladevorgang auftretenden Volumenkontraktion auch nicht zu einer irreversiblen Schädigung dieses Matrix- bzw. Wirtsgerüstes. Auch verfügen die erfindungsgemäß erhältlichen silizium- und/oder zinnhaltigen Materialien über ausgezeichnete mechanische Eigenschaften, insbesondere über entsprechende Festigkeiten, bei gleichzeitig guter Verfügbarkeit des erforderlichen Ausdehnungsvolumens für das Silizium bzw. Zinn.

Erfindungsgemäß gelingt es somit überraschend, Materialien mit derartigen mechanischen Eigenschaften bereitzustellen, daß diese unmittelbar die Form von anwendungsfertigen Elektroden liefern, so daß bei der Herstellung von Anoden auf die Zugabe eines insbesondere organischen Bindemittels (im allgemeinen einige Gewichtsprozent) zur Herstellung mechanisch fester Elektroden gänzlich verzichtet werden kann.

Bei dem zuvor geschilderten Verfahren führt die Verfahrensführung zu einem elektrisch leitfähigen porösen Kohlenstoffmaterial mit hierin eingelagerten Silizium-, Zinn- und/oder Silizium/Zinn-Nanopartikeln, d. h. es resultieren somit poröse Kohlenstoffsubstrate mit hierin eingelagertem nanopartikulärem Silizium und/oder Zinn.

Was die eingesetzten Nanopartikel (d. h. Silizium-, Zinn- und/oder Silizium/Zinn-Nanopartikel) anbelangt, so handelt es sich um Partikel mit einer mittleren Partikelgröße (D50), insbesondere mit einer mittleren Kristallitgröße (D50), im Bereich von 1 bis 1.000 nm, insbesondere 2 bis 500 nm, vorzugsweise 2 bis 250 nm, besonders bevorzugt 5 bis 100 nm, ganz besonders bevorzugt 5 bis 50 nm.

Insbesondere geeignet sind Nanopartikel mit einer mittleren Kristallitgröße zwischen 1 und 100 nm. Besonders geeignet sind Nanopartikel mit einer mittleren Kristallitgröße zwischen 5 und 50 nm.

Im Fall von Siliziumnanopartikeln besonders geeignet ist aggregiertes Silizium (sogenannte "harte Agglomerate") wie auch nichtaggregiertes Silizium (sogenannte "weiche Agglomerate") jeweils mit einer mittleren Kristallitgröße zwischen 1 und 100 nm. Besonders geeignet ist in diesem Fall Silizium mit einer mittleren Kristallitgröße zwischen 5 und 50 nm.

Die vorgenannten mittleren Partikelgrößen bzw. Kristallitgrößen lassen sich beispielsweise aus Histogrammen von Transmissionselektronenmikroskopie-Aufnahmen oder aus Röntgendiffraktogrammen sowie - beispielsweise im Fall des nichtaggregierten Siliziums - aus der BET-Oberfläche bestimmen.

Typischerweise können für die erfindungsgemäßen Zwecke beispielsweise durch Gasphasensynthese, Mikrowellenplasmasynthese oder dergleichen hergestellte, bevorzugt kristalline Silizium-, Zinn- und/oder Silizium/Zinn-Nanopartikel eingesetzt werden. Geeignete, insbesondere kristalline Silizium-, Zinn- und/oder Silizium/Zinn-Nanopartikel lassen sich beispielsweise im Mikrowellenplasma im Fall von Siliziumnanopartikeln ausgehend von Silan oder aber im Fall von Zinn-Nanopartikeln ausgehend von Stannan oder aber schließlich im Fall von erfindungsgemäß einzusetzenden Si/Sn-Nanopartikeln ausgehend von Silan/Stannan-Mischungen oder Silan/Zinntetrachlorid-Mischungen erhalten. Dies ist dem Fachmann als solches bekannt, so daß es an dieser Stelle keiner weitergehenden diesbezüglichen Einzelheiten bedarf.

Wie zuvor ausgeführt, sind die im Rahmen der Erfindung eingesetzten Silizium-, Zinn- und/oder Silizium/Zinn-Nanopartikel üblicherweise kristallin ausgebildet. Vorteilhafterweise liegt der Kristallinitätsgrad der eingesetzten Silizium-, Zinn- und/oder Silizium/Zinn-Nanopartikel bei mindestens 70 %, insbesondere bei mindestens 80 %, vorzugsweise bei mindestens 90 %, besonders bevorzugt bei mindestens 95 %, und ganz besonders bevorzugt sind die eingesetzten Silizium-, Zinn- und/oder Silizium/Zinn-Nanopartikel vollständig kristallin ausgebildet.

Erfindungsgemäß geeignete Silizium-, Zinn- und/oder Silizium/Zinn-Nanopartikel weisen üblicherweise eine BET-Oberfläche von 1 bis 2.000 m²/g, insbesondere 10 bis 1.500 m²/g, vorzugsweise 25 bis 1.000 m²/g, besonders bevorzugt 50 bis 600 m²/g, auf. Alle im Rahmen der vorliegenden Erfindung genannten bzw. ermittelten BET-Werte werden gemäß ISO 9277 (1995), welche die DIN 66131 ersetzt, bestimmt.

Die erfindungsgemäß eingesetzten Siliziumnanopartikel können insbesondere aus reinem Silizium bestehen, können gegebenenfalls jedoch versehen sein mit sein mindestens einem Dotierelement, wie nachfolgend nach beschrieben. Im Fall der erfindungsgemäß eingesetzten Zinn-Nanopartikel können diese insbesondere aus reinem Zinn bestehen, können gegebenenfalls jedoch versehen sein mit mindestens einem Dotierelement, wie nachfolgend nach beschrieben. Im Fall der erfindungsgemäß eingesetzten Silizium/Zinn-Nanopartikel können diese insbesondere aus Silizium/Zinn-Gemischen im beliebigen Mischungsverhältnis, bestehen, insbesondere auf der Basis von Silizium/Zinn-Kompositen oder Silizium/Zinn-Legierungen, bestehen, wobei auch die Silizium/Zinn-Nanopartikel gegebenenfalls versehen sein können mit mindestens einem Dotierelement, wie nachfolgend nach beschrieben. Nanopartikel auf Basis von Silizium/Zinn-Kompositen oder Silizium/Zinn-Legierungen werden erfindungsgemäß bevorzugt eingesetzt. Zinn hat den Vorteil einer guten elektrischen Leitfähigkeit.

Darüber hinaus ist es möglich, daß die eingesetzten, insbesondere kristallinen Silizium-, Zinn- und/oder Silizium/Zinn-Nanopartikel dotiert sind bzw. mindestens ein Dotierelement enthalten. Insbesondere können die erfindungsgemäßen Silizium-, Zinn- und/oder Silizium/Zinn-Nanopartikel eine p- und/oder n-Dotierung, vorzugsweise von bis zu 10²¹/cm³, aufweisen, wobei die Dotierelemente ausgewählt sein können aus der 3. bis 5. Hauptgruppe des Periodensystems der Elemente (entsprechend der 13. bis 15. Gruppe des Periodensystems der Elemente nach neuer Nomenklatur) und aus Elementen der Eisengruppe, insbesondere aus der Gruppe von Bor, Aluminium, Phosphor und/oder Eisen, sowie deren Mischungen.

Insbesondere kann es vorgesehen sein, daß die Silizium-, Zinn- und/oder Silizium/Zinn-Nanopartikel dotiert sind bzw. mindestens ein Dotierelement enthalten, wobei dieses Dotierelement insbesondere ausgewählt sein kann aus der Gruppe von Phosphor, Arsen, Antimon, Bor, Aluminium, Gallium und/oder Indium.

Die Menge an eingesetzten Silizium-, Zinn- und/oder Silizium/Zinn-Nanopartikeln kann in weiten Bereichen variieren.

Üblicherweise werden die Silizium-, Zinn- und/oder Silizium/Zinn-Nanopartikel im Rahmen des Verfahrens in solchen Mengen eingesetzt, daß der molare Gehalt an Silizium und/oder Zinn (d. h. also der molare Gehalt an Silizium-, Zinn- und/oder Silizium/Zinn-Nanopartikeln) im elektrisch leitfähigen, porösen silizium- und/oder zinnhaltigen Kohlenstoffmaterial 5 bis 90 Mol-%, insbesondere 10 bis 80 Mol-%, vorzugsweise 20 bis 70 Mol-%, beträgt, bezogen auf das elektrisch leitfähige, poröse silizium- und/oder zinnhaltige Kohlenstoffmaterial.

In vorteilhafter Weise werden die Silizium-, Zinn- und/oder Silizium/Zinn-Nanopartikel im Rahmen des Verfahrens in solchen Mengen eingesetzt, daß der volumenbezogene Gehalt an Silizium und/oder Zinn (d. h. also der volumenbezogene Gehalt an Silizium-, Zinn- und/oder Silizium/Zinn-Nanopartikeln) im elektrisch leitfähigen, porösen silizium- und/oder zinnhaltigen Kohlenstoffmaterial 1 bis 60 Vol.-%, insbesondere 2 bis 50 Vol.-%, vorzugsweise 5 bis 40 Vol.-%, beträgt, bezogen auf das elektrisch leitfähige, poröse silizium- und/oder zinnhaltige Kohlenstoffmaterial.

Typischerweise werden die Silizium-, Zinn- und/oder Silizium/Zinn-Nanopartikel im Rahmen des Verfahrens in solchen Mengen eingesetzt, daß der massenbezogene Gehalt an Silizium und/oder Zinn (d. h. also der massenbezogene Gehalt an Silizium-, Zinn- und/oder Silizium/Zinn-Nanopartikeln) im elektrisch leitfähigen, porösen silizium- und/oder zinnhaltigen Kohlenstoffmaterial 1 bis 70 Gew.-%, insbesondere 2 bis 60 Gew.-%, vorzugsweise 5 bis 50 Gew.-% beträgt, bezogen auf das elektrisch leitfähige, poröse silizium- und//oder zinnhaltige Kohlenstoffmaterial.

Vorteilhafterweise werden die Silizium-, Zinn- und/oder Silizium/Zinn-Nanopartikel vor Einbringung in das organische Polymer, insbesondere vor Dispergierung in dem organischen Polymer, einer Oberflächenmodifizierung bzw. Oberflächenfunktionalisierung, vorzugsweise einer Hydrophobierung unterzogen. Insbesondere kann die Oberflächenmodifizierung bzw. Oberflächenfunktionalisierung durch Alkylsilylgruppenfunktionalisierung, bevorzugt durch Methysilylgruppenfunktionalisierung (z. B. Trimethylsilylgruppenfunktionalisierung) erfolgen. Die Funktionalisierung der Nanopartikeloberfläche, insbesondere zu Zwecken der Hydrophobierung, ist vorteilhaft, um die Silizium-, Zinn- und/oder Silizium/Zinn-Nanopartikel in dem Polymer bzw. den diesbezüglichen Ausgangsmonomeren dispergieren, insbesondere homogen dispergieren, zu können. Zur Funktionalisierung können insbesondere reaktive Silane verwendet werden; besonders bevorzugt sind Chlorsilane und Hexamethyldisilazan, besonders bevorzugt Chlorsilane der allgemeinen Formel SiClₓR₄₋ₓ mit x = 1 bis 3, wobei der Rest R ein organischer Rest, bevorzugt ein Alkylrest, ist, bevorzugt mit der allgemeinen Formel CₙH₍₂ₙ₊₁₎, besonders bevorzugt mit n = 1 bis 6.

Gemäß einer besonders bevorzugten Ausführungsform des Verfahrens wird das organische Polymer in situ in Gegenwart der Silizium-, Zinn- und/oder Silizium/Zinn-Nanopartikel erzeugt. Zu diesem Zweck werden die vorzugsweise zuvor oberflächenmodifizierten bzw. oberflächenfunktionalisierten, insbesondere hydrophobierten Silizium-, Zinn- und/oder Silizium/Zinn-Nanopartikel in den entsprechenden organischen Monomeren bzw. deren Lösungen oder Dispersionen dispergiert, und nachfolgend werden dann die organischen Monomere in Gegenwart der Silizium-, Zinn- und/oder Silizium/Zinn-Nanopartikel zu den betreffenden organischen Polymeren polymerisiert. Es resultiert eine organische Polymermatrix, in welcher die Silizium-, Zinn- und/oder Silizium/Zinn-Nanopartikel eingelagert bzw. eingebettet sind, vorzugsweise in homogener bzw. gleichmäßiger Verteilung, wobei diese Polymermatrix dann nachfolgend carbonisiert bzw. pyrolisiert wird, wie im Folgenden noch im Detail beschrieben.

Bei der zuvor geschilderten besonderen Ausführungsform, der zufolge organische Monomere eingesetzt werden, welche nachfolgend in situ in Gegenwart der Silizium-, Zinn- und/oder Silizium/Zinn-Nanopartikel polymerisiert werden, kommen insbesondere solche Monomere zum Einsatz, welche keinen chemisch gebundenen Sauerstoff enthalten; bevorzugte organische Monomere sind insbesondere ausgewählt aus der Gruppe von Vinylchlorid, Styrol, Tetrafluorethylen, Ethylen und/oder Polypropylen, bevorzugt Styrol, besonders bevorzugt Styrol zusammen mit Divinylbenzol (im letztgenannten Fall entsteht nach der Polymerisation divinylbenzolvernetztes Polystyrol, wie nachfolgend noch beschrieben).

Im Rahmen des Verfahrens werden als organische Polymere, welche die Matrix für die hierin einzulagernden Silizium-, Zinn- und/oder Silizium/Zinn-Nanopartikel bilden, vorteilhafterweise solche organischen Polymere eingesetzt, welche keinen chemisch gebundenen Sauerstoff enthalten; chemisch gebundener Sauerstoff kann bei der nachfolgenden Carbonisierung einen Teil der Silizium-, Zinn- und/oder Silizium/Zinn-Nanopartikel zu Siliziumdioxid bzw. Zinnoxid oxidieren, welches dann für die Verwendung als Anodenmaterial, insbesondere für Lithium-Ionenbatterien, unbrauchbar wäre. In bevorzugter Weise werden die organischen Polymere, welche die Matrix für die hierin einzulagernden Silizium-, Zinn- und/oder Silizium/Zinn-Nanopartikel bilden, ausgewählt aus der Gruppe von Polyvinylchlorid, Polyacrylnitril, Polystyrol, Polytetrafluorethylen, Polyethylen und/oder Polypropylen, bevorzugt Polystyrol. Besonders bevorzugt ist divinylbenzolvernetztes Polystyrol, insbesondere mit einem Divinylbenzolgehalt von 0,1 bis 20 Gew.-%, vorzugsweise 1 bis 10 Gew.-%, bezogen auf organisches Polymer.

Bevorzugt ist es, wenn die organischen Monomere und/oder die organischen Polymere in sulfonierter Form vorliegen bzw. Sulfonsäuregruppen aufweisen. Üblicherweise erfolgt die Einführung der Sulfonsäuregruppen erst nach Herstellung des Polymers bzw. vor dem Verfahrensschritt der Carbonisierung, und zwar durch Sulfonierung in an sich bekannter Weise. Sulfonsäuregruppen bilden bei der nachfolgenden Carbonisierung freie Radikale, welche zu den für die gute Ausbeute an Kohlenstoff verantwortlichen Vernetzungen im Rahmen des Pyrolysevorgangs führen. Anstelle von Sulfonsäuregruppen können grundsätzlich auch andere chemisch geeignete Gruppen verwendet werden, beispielsweise Isocyanatgruppen.

Was die Einlagerung bzw. Dispergierung der Silizium-, Zinn- und/oder Silizium/Zinn-Nanopartikel in die organischen Monomere bzw. Polymere anbelangt, so kann diese durch dem Fachmann an sich übliche Maßnahmen erfolgen, beispielsweise durch Rühren, Kneten, Vermahlen mittels Kugelmühlen, Ultraschallbehandlung, Extrudieren etc.

Gemäß einer besonderen Ausführungsform des Verfahrens können die die Silizium-, Zinn- und/oder Silizium/Zinn-Nanopartikel enthaltenden Polymere vor dem Verfahrensschritt der Carbonisierung einer Formgebung unterzogen werden. Beispielsweise können die die Silizium-, Zinn- und/oder Silizium/Zinn-Nanopartikel enthaltenden Polymere beispielsweise zu Formkörpern, wie Kugeln, Scheiben, Blöcken, komplexeren Strukturen oder dergleichen, weiterverarbeitet werden, welche nachfolgend carbonisiert bzw. pyrolisiert werden, so daß Kohlenstoffspezies mit großer spezifischer Oberfläche (BET) mit hierin eingebetteten Silizium-, Zinn- und/oder Silizium/Zinn-Nanopartikeln entstehen, wie nachfolgend noch geschildert.

Was den Verfahrensschritt der Carbonisierung anbelangt, welcher synonym auch als "Schwelung", "Pyrolyse", "Abbrand" oder dergleichen bezeichnet wird, so erfolgt im Rahmen dieses Verfahrensschrittes die Umwandlung des polymeren Ausgangsmaterials zu Kohlenstoff, d. h. mit anderen Worten wird das polymere kohlenstoffhaltige Ausgangsmaterial verkohlt. Bei der Schwelung bzw. Carbonisierung der zuvor genannten Polymere, welche funktionelle chemische Gruppen, die bei ihrer thermischen Zersetzung zu freien Radikalen und somit zu Vernetzungen, insbesondere Sulfonsäuregruppen, enthalten, werden - unter Abspaltung flüchtige Bestandteile, wie insbesondere SO₂ - die funktionellen chemischen Gruppen, insbesondere Sulfonsäuregruppen, zerstört, und es bilden sich freie Radikale, die eine starke Vernetzung bewirken, ohne die es keinen nennenswerten Pyrolyserückstand (= Kohlenstoff) geben würde.

Im allgemeinen wird die Carbonisierung unter zumindest im wesentlichen inerten Bedingungen, insbesondere unter Ausschluß von Sauerstoff, bevorzugt unter Inertgasatmosphäre, durchgeführt. Auf diese Weise wird zum einen ein zu starker Abbrand verhindert, und zum anderen wird eine unerwünschte Oxidation des Siliziums zu Siliziumdioxid bzw. des Zinns zu Zinnoxid verhindert.

Üblicherweise wird die Carbonisierung bei Temperaturen im Bereich von 300 bis 2.000 °C, insbesondere 600 bis 1.200 °C, vorzugsweise 700 bis 1.000 °C durchgeführt, wobei insbesondere Zeitdauern von 0,1 bis 20 Stunden, vorzugsweise 0,5 bis 10 Stunden, besonders bevorzugt 1 bis 5 Stunden, üblich sind.

An die Carbonisierung sollte sich kein weitergehender Aktivierungsschritt anschließen, wie ansonsten bei der Herstellung von Aktivkohle üblich, da dies zu der zuvor geschilderten unerwünschten Oxidation des Siliziums bzw. Zinns führen würde.

Um die elektrische Leitfähigkeit des erfindungsgemäßen silizium- und/oder zinnhaltigen Kohlenstoffmaterials noch weiter zu verbessern, kann es vorgesehen sein, im Verlauf des Verfahrens Graphit und/oder mindestens einen Leitfähigkeitsverbesserer, insbesondere Leit-Ruß, zuzusetzen. Dabei können der Graphit und/oder Leitfähigkeitsverbesserer, insbesondere der Leit-Ruß, den zu polymerisierenden Monomeren und/oder den Polymeren zugesetzt werden. Alternativ können der Graphit und/oder der Leitfähigkeitsverbesserer auch dem fertigen Kohlenstoffmaterial nach der Carbonisierung zugesetzt werden. Bezüglich einer weitergehenden Charakterisierung der in diesem Zusammenhang einzusetzenden Graphite und/oder Leitfähigkeitsverbesserer, insbesondere Leit-Ruße, und die diesbezüglichen Mengen kann auf die nachfolgenden Ausführungen zu den erfindungsgemäßen silizium- und/oder zinnhaltigen Kohlenstoffmaterialien verwiesen werden, welche in bezug auf das erfindungsgemäße Verfahren entsprechend gelten.

Wie zuvor ausgeführt, ist Gegenstand der vorliegenden Erfindung ein elektrisch leitfähiges, poröses silizium- und/oder zinnhaltiges Kohlenstoffmaterial, welches sich insbesondere für die Herstellung eines Anodenmaterials, bevorzugt für Lithium-Ionenbatterien, eignet, wobei das silizium- und/oder zinnhaltige Kohlenstoffmaterial in eine poröse Kohlenstoffmatrix eingelagerte Siliziumnanopartikel und/oder Zinn-Nanopartikel und/oder Silizium/Zinn-Nanopartikel enthält.

Wie zuvor ausgeführt, zeichnet sich das erfindungsgemäße Kohlenstoffmaterial durch eine hohe Porosität aus, was eine problemlose und reversible Interkalation von Lithium-Ionen ermöglicht, da die Silizium-, Zinn- und/oder Silizium/Zinn-Nanopartikel infolge der Porosität gut zugänglich sind, und zudem eine problemlose Volumenexpansion ("Atmen des Siliziums bzw. Zinns") zuläßt.

Die erfindungssgemäßen Kohlenstoffmaterialien zeichnen sich durch eine Porosität, bestimmt als Gesamtporenvolumen nach Gurvich, im Bereich von 0,1 bis 0,3 cm³/g, aus.

Insbesondere ist es von Vorteil, wenn das erfindungsgemäße silizium- und/oder zinnhaltige Kohlenstoffmaterial eine solche Porosität aufweist, dass mindestens 10 Vol.-%, insbesondere mindestens 15 Vol.-%, vorzugsweise mindestens 20 Vol.-%, des Gesamtvolumens des Kohlenstoffmaterials durch Poren gebildet sind bzw. porös ausgebildet sind. Bevorzugterweise sind 10 bis 80 Vol.-%, insbesondere 15 bis 75 Vol.-%, vorzugsweise 20 bis 60 Vol.-%, des Gesamtvolumens des Kohlenstoffmaterials durch Poren gebildet.

Weiterhin zeichnen sich die erfindungsgemäßen Kohlenstoffmaterialen durch eine hohe innere Oberfläche (BET) aus. Die erfindungsgemäßen Kohlenstoffmaterialien weisen eine BET-Oberfläche von 50 bis 200 m²/g auf.

Wie zuvor dargelegt, kann der Gehalt an Silizium und/oder Zinns bzw. der Gehalt an Nanopartikeln (d. h. Silizium-, Zinn- und/oder Silizium/Zinn-Nanopartikeln) in den erfindungsgemäßen Kohlenstoffmaterialien in weiten Bereichen variieren.

So kann der molare Gehalt an Silizium und/oder Zinn (d. h. also der molare Gehalt an Silizium-, Zinn- und/oder Silizium/Zinn-Nanopartikeln) in dem erfindungsgemäßen Kohlenstoffmaterial im Bereich von 5 bis 90 Mol-%, insbesondere 10 bis 80 Mol-%, vorzugsweise 20 bis 70 Mol-%, bezogen auf das Kohlenstoffmaterial, variieren.

Weiterhin kann der volumenbezogene Gehalt an Silizium und/oder Zinn (d. h. also der volumenbezogene Gehalt an Silizium-, Zinn- und/oder Silizium/Zinn-Nanopartikeln) in dem erfindungsgemäßen Kohlenstoffmaterial im Bereich von 1 bis 60 Vol.-%, insbesondere 2 bis 50 Vol.-%, vorzugsweise 5 bis 40 Vol.-%, bezogen auf das Kohlenstoffmaterial, variieren.

Schließlich kann der massenbezogene Gehalt an Silizium und/oder Zinn (d. h. also der massenbezogene Gehalt an Silizium-, Zinn- und/oder Silizium/Zinn-Nanopartikeln) in dem erfindungsgemäßen Kohlenstoffmaterial im Bereich von 1 bis 70 Gew.-%, insbesondere 2 bis 60 Gew.-%, vorzugsweise 5 bis 50 Gew.-%, bezogen auf das Kohlenstoffmaterial, variieren.

Wie zuvor dargelegt, kann das erfindungsgemäße Kohlenstoffmaterial außerdem Graphit enthalten. Bevorzugterweise enthält das Kohlenstoffmaterial bei dieser optionalen Ausführungsform Graphit in molaren Mengen von 1 bis 50 Mol-%, bevorzugt 5 bis 40 Mol-%, bezogen auf das Kohlenstoffmaterial. Bei dieser Ausführungsform kann der Graphit in massenbezogenen Mengen von 0,001 bis 50 Gew.-%, insbesondere 0,01 bis 45 Gew.-%, vorzugsweise 0,1 bis 40 Gew.-%, besonders bevorzugt 1 bis 40 Gew.-%, bezogen auf das Kohlenstoffmaterial, vorhanden sein. Üblicherweise werden zu diesem Zweck Graphitpartikel mit mittleren Teilchengrößen (D50) im Bereich von 0,1 bis 200 µm, insbesondere 1 bis 100 µm, eingesetzt. Die BET-Oberfläche des eingesetzten Graphits kann im Bereich von 1 bis 75 m²/g, insbesondere 2 bis 50 m²/g, vorzugsweise 5 bis 30 m²/g, besonders bevorzugt 10 bis 20 m²/g, variieren. Zur Verbesserung der elektrischen Leitfähigkeit einzusetzende Graphite sind dem Fachmann als solche bekannt; diese Produkte sind im Handel erhältlich.

Weiterhin kann es vorgesehen sein, dass das erfindungsgemäße Kohlenstoffmaterial gegebenenfalls mindestens einen Leitfähigkeitsverbesserer, insbesondere einen Leit-Ruß, enthält. Bei dieser Ausführungsform kann der Leitfähigkeitsverbesserer, insbesondere der Leit-Ruß in molaren Mengen von 1 bis 20 Mol-%, bevorzugt 3 bis 10 Mol-%, bezogen auf das Kohlenstoffmaterial, vorhanden sein. Üblicherweise ist der Leitfähigkeitsverbesserer, insbesondere der Leit-Ruß, in massenbezogenen Mengen von 0,001 bis 20 Gew.-%, insbesondere 0,01 bis 15 Gew.-%, vorzugsweise 0,1 bis 10 Gew.-%, bezogen auf das Kohlenstoffmaterial, vorhanden. Zu diesem Zweck einsetzbare Leitfähigkeitsverbesserer, insbesondere Leit-Ruße, sind dem Fachmann als solche bekannt und zudem handelsüblich. Vorteilhafterweise kommen Leitfähigkeitsverbesserer, insbesondere Leit-Ruße, mit mittleren Teilchengrößen (D50) im Bereich von 1 bis 100 nm, insbesondere 20 bis 60 nm, vorzugsweise 30 bis 50 nm, zum Einsatz. Erfindungsgemäß geeignete Leitfähigkeitsverbesserer, insbesondere Leit-Ruße, weisen BET-Oberflächen im Bereich von 10 bis 200 m²/g, insbesondere 50 bis 80 m²/g, vorzugsweise 55 bis 70 m²/g, auf.

Das erfindungsgemäße Kohlenstoffmaterial zeichnet sich durch eine gute elektrische Leitfähigkeit aus. Üblicherweise liegt die elektrische Leitfähigkeit des erfindungsgemäßen Kohlenstoffmaterials im Bereich von 10⁰ bis 10⁶ S/m, insbesondere 5 • 10⁰ bis 10⁵ S/m. Insbesondere beträgt die Leitfähigkeit des erfindungsgemäßen Kohlenstoffmaterials mindestens 10⁰ S/m, insbesondere mindestens 10³ S/m, vorzugsweise mindestens 10⁴ S/m.

Weiterhin betrifft die vorliegende Erfindung - gemäß einem **zweiten** Erfindungsaspekt - die Verwendung des erfindungsgemäßen Kohenstoffmaterials als Anodenmaterial, insbesondere für Lithium-Ionenbatterien, bzw. zur Herstellung eines Anodenmaterials, insbesondere für Lithium-Ionenbatterien.

Wiederum weiterer Gegenstand der vorliegenden Erfindung - gemäß einem **dritten** Aspekt der vorliegenden Erfindung - ist ein Anodenmaterial, welches das zuvor beschriebene Kohlenstoffmaterial nach der vorliegenden Erfindung enthält.

Gemäß einer besonderen Ausführungsform kann es vorgesehen sein, daß das Anodenmaterial nach der vorliegenden Erfindung ausschließlich aus dem erfindungsgemäßen Kohlenstoffmaterial besteht. Dies ist insbesondere dann der Fall, wenn das erfindungsgemäße Kohlenstoffmaterial zu als Anoden geeigneten Formkörpern verarbeitet ist und zudem eine ausreichende mechanische Stabilität aufweist.

Alternativ kann es jedoch auch vorgesehen sein, das erfindungsgemäße Kohlenstoffmaterial zusammen mit weiteren Bestandteilen, insbesondere Graphit und/oder Leitfähigkeitsverbesserer, insbesondere Leit-Ruß, und/oder Bindemittel, zu einem Anodenmaterial nach der vorliegenden Erfindung zu verarbeiten, welches insbesondere als Anodenmaterial für Lithium-Ionenbatterien geeignet ist.

Ein in diesem Zusammenhang geeignetes Anodenmaterial nach der vorliegenden Erfindung kann insbesondere
- ein erfindungsgemäßes Kohlenstoffmaterial, wie zuvor beschrieben, insbesondere in Mengen von 5 bis 100 Gew.-%, insbesondere 10 bis 95 Gew.-%,
- gegebenenfalls Graphit, insbesondere in Mengen von 0,001 bis 50 Gew.-%, insbesondere 0,01 bis 45 Gew.-%, vorzugsweise 0,1 bis 40 Gew.-%, besonders bevorzugt 1 bis 40 Gew.-%,
- gegebenenfalls mindestens einen Leitfähigkeitsverbesserer, insbesondere Leit-Ruß, insbesondere in Mengen von 0,001 bis 20 Gew.-%, insbesondere 0,01 bis 15 Gew.-%, vorzugsweise 0,1 bis 10 Gew.-%,
- gegebenenfalls mindestens ein vorzugsweise organisches Bindemittel, insbesondere in Mengen von 0,01 bis 30 Gew.-%, insbesondere 0,1 bis 25 Gew.-%, vorzugsweise 0,5 bis 15 Gew.-%, besonders bevorzugt 1 bis 10 Gew.-%,
enthalten, wobei alle vorgenannten Gewichtsprozentangaben auf das Anodenmaterial bezogen sind und in Summe 100 Gew.-% ergeben.

Bei dieser vorgenannten Ausführungsform können solche Graphite und Leitfähigkeitsverbesserer, insbesondere Leit-Ruße, eingesetzt werden, wie sie zuvor beschrieben worden sind; zur Vermeidung unnötiger Wiederholungen kann diesbezüglich auf die vorstehenden Ausführungen verwiesen werden, welche in bezug auf diesen Erfindungsaspekt entsprechend gelten.

Erfindungsgemäß geeignete Bindemittel, insbesondere organische Bindemittel, sind dem Fachmann als solche bekannt. Als Bindemittel können alle Bindemittel verwendet werden, welche in der Lage sind, die vorgenannten Komponenten miteinander dauerhaft zusammenzuführen bzw. zusammenzuhalten und zu verbinden. Vorzugsweise werden als Bindemittel polymere Bindemittel, bevorzugt Polyvinylidenfluorid, Polytetrafluorethylen oder Polyolefine, besonders bevorzugt thermoplastische Elastomere, insbesondere Ethylen/Propylen/Dien-Terpolymere, eingesetzt. Auch kommen Gelatine oder modifizierte Cellulose als Bindemittel in Betracht.

Das erfindungsgemäße Anodenmaterial ist durch eine gute elektrische Leitfähigkeit gekennzeichnet, welche insbesondere im Bereich von 10¹ bis 10⁵ S/m, insbesondere 5 • 10¹ bis 10⁴ S/m, liegt. Insbesondere ist das erfindungsgemäße Anodenmaterial durch eine Leitfähigkeit von mindestens 10¹ S/m, insbesondere mindestens 10² S/m, vorzugsweise mindestens 10³ S/m, gekennzeichnet. Schließlich ist Gegenstand der vorliegenden Erfindung - gemäß einem **vierten** Aspekt der vorliegenden Erfindung - eine Batterie, insbesondere Lithium-Ionenbatterie, vorzugsweise in Form eines Akkumulators, welche ein wie zuvor definiertes Anodenmaterial nach der vorliegenden Erfindung bzw. ein wie zuvor definiertes Kohlenstoffmaterial nach der vorliegenden Erfindung umfaßt.

Für weitergehende Einzelheiten zu den übrigen Erfindungsaspekten der vorliegenden Erfindung kann zur Vermeidung unnötiger Wiederholungen auf die vorstehenden Ausführungen zu dem ersten Erfindungsaspekt und vice versa verwiesen werden, welche in bezug auf die übrigen Erfindungsaspekte entsprechend gelten.

Im Rahmen der vorliegenden Erfindung werden somit insbesondere als Anodenmaterial für Lithium-Ionenbatterien geeignete, poröse silizium- und/oder zinnhaltige Produkte bzw. Materialien bereitgestellt. Gegenstand der Erfindung ist somit ein poröses bis hochporöses Material für die Verwendung als Anodenmaterial in Lithium-Ionenbatterien.

Typischerweise können zu dem vorgenannten Zweck beispielsweise durch Gasphasensynthese oder dergleichen hergestellte kristalline Siliziumnanopartikel, Silizium/Zinn-Nanokompositpartikel, Nanopartikel auf Basis von Silizium/Zinn-Legierungen oder aber Zinn-Nanopartikel in einem Monomer mit nachfolgender Polymerisation oder Polymer homogen dispergiert und anschließend pyrolysiert werden.

Typischerweise kann im Rahmen der vorliegenden Erfindung wie folgt vorgegangen werden:
Für das erfindungsgemäße Material können kristalline Nanopartikel aus Silizium und/oder Zinn zunächst in einem Monomer, welches dann in situ in Gegenwart des Siliziums und/oder Zinns polymerisiert wird, oder aber alternativ in einem (organischen) Polymer homogen dispergiert werden; wie zuvor ausgeführt, wird im Fall des Monomers dieses anschließend polymerisiert.

Die Polymere werden beispielsweise zu Formkörpern, wie Kugeln, Scheiben, Blöcken oder komplexeren Strukturen, weiterverarbeitet und danach pyrolysiert, so daß eine Kohlenstoffspezies mit großer innerer Oberfläche (BET) und darin eingebetteten Silizium-, Zinn- und/oder Silizium/Zinn-Nanopartikeln entsteht.

Besonders geeignet ist im Fall von Siliziumnanopartikeln aggregiertes (sogenannte "harte Agglomerate") und nichtaggregiertes (sogenannte "weiche Agglomerate") Silizium mit einer mittleren Kristallitgröße zwischen 1 und 100 nm; ganz besonders geeignet ist Silizium mit einer mittleren Kristallitgröße zwischen 5 und 50 nm. Die mittleren Kristallitgrößen lassen sich beispielsweise aus Histogrammen von Transmissionselektronenmikroskopie-Aufnahmen und/oder aus Röntgendiffraktogrammen sowie - im Fall des nichtaggregierten Pulvers - aus der BET-Oberfläche bestimmen.

Um eine Dispergierung der Silizium-, Zinn- und/oder Silizium/Zinn-Nanopartikel in organischen Monomeren oder Polymeren durchzuführen, ist es vorteilhaft, vorab eine Funktionalisierung der Partikeloberfläche zwecks Hydrophobierung durchzuführen. Zu diesem Zweck können zur Funktionalisierung beispielsweise reaktive Silane verwendet werden, wobei besonders bevorzugt Chlorsilane und Hexamethyldisilazan sind, ganz besonders bevorzugt Chlorsilane der allgemeinen Formeln SiClₓR₄₋ₓ mit x = 1 bis 3, wobei R ein organischer Rest ist, bevorzugt mit der allgemeinen Formel CₙH₍₂ₙ₊₁₎, ganz besonders bevorzugt mit n = 1 bis 6.

Die Einbindung der auf diese Weise funktionalisierten Silizium-, Zinn- und/oder Silizium/Zinn-Nanopartikel durch Dispersion dieser Partikel in ein flüssiges/viskoses Monomer oder Polymer kann dann beispielsweise durch Rühren, Kneten, Vermahlen insbesondere in Kugelmühlen, Ultraschall, Extrudieren etc. erfolgen.

Als einsetzbare Monomere bzw. Polymere besonders geeignet sind organische Verbindungen, die keinen chemisch gebundenen Sauerstoff enthalten, insbesondere (Poly-)Vinylchlorid, (Poly-)Styrol, (Poly)-Tetrafluorethylen, (Poly-)Ethylen und (Poly-)Propylen; ganz besonders geeignet ist (Poly-)Styrol, besonders bevorzugt mit Divinylbenzol als Vernetzer.

Das Silizium- bzw. Zinn- bzw. Silizium/Zinn-Pulver kann nominell undotiert sein oder eine p- oder n-Dotierung von bis zu 10²¹/cm³ aufweisen; bevorzugt sind Elemente der 3. und 5. Hauptgruppe (neue Nomenklatur: Gruppe 13 und 15) des Periodensystems der Elemente sowie Elemente aus der Eisengruppe, und besonders bevorzugt sind Bor, Aluminium, Phosphor und/oder Eisen.

Erfindungsgemäß gelingt es, mechanisch feste Materialien herzustellen, die sogar unmittelbar in Form von anwendungsfertigen Elektroden zugänglich sind, so daß bei der Herstellung von Anoden auf die Zugabe eines insbesondere organischen Bindemittels (im allgemeinen einige Gewichtsprozent) zur Herstellung mechanisch fester Elektroden gänzlich verzichtet werden kann.

Eine weitere Möglichkeit zur Herstellung der eigentlichen Anoden ausgehend von dem erfindungsgemäßen Anodenmaterial besteht darin, der Dispersion aus Monomer bzw. Polymer und Silizium-, Zinn- und/oder Silizium/Zinn-Nanopartikeln außerdem Graphit und/oder Leit-Ruß zuzusetzen, um die Aufnahmefähigkeit für Lithium und die elektrische Leitfähigkeit zu verbessern. Die Zugabe von Graphit kann typischerweise, bezogen auf das erfindungsgemäße Material, 1 bis 50 Mol-% und bevorzugt 5 bis 40 Mol-% betragen. Die Zugabe von Leit-Ruß kann typischerweise 1 bis 20 Mol-%, bevorzugt 3 bis 10 Mol-%, bezogen auf das erfindungsgemäße Material, betragen.

Der Gehalt an Silizium und/oder Zinn im erfindungsgemäßen Material kann typischerweise in weiten Grenzen variieren. Beispielhaft kann eine Zusammensetzung 5 bis 90 Mol-%, bevorzugt 20 bis 70 Mol-%, Silizium und/oder Zinn enthalten, bezogen auf das erfindungsgemäße Material.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die nachfolgenden Ausführungsbeispiele dienen lediglich zur Veranschaulichung der vorliegenden Erfindung, ohne die vorliegende Erfindung jedoch hierauf zu beschränken.

### AUSFÜHRUNGSBEISPIELE:

Herstellung erfindungsgemäßer silizium- und/oder zinnhaltiger Anodenmaterialien
10 g eines aus Mikrowellensynthese gewonnenen und oberflächenoxidierten Siliziums mit einer BET-Oberfläche von 200 m²/g werden unter starkem Rühren in einem Rundkolben mit 100 ml Hexamethyldisilazan versetzt und so lange bei einem leichten Unterdruck (ca. 900 mbar absolut) unter Stickstoff-Spülung gerührt, bis in der überstehenden Gasphase kein Ammoniak mehr nachweisbar ist. Anschließend wird das überschüssige Hexamethyldisilazan im Vakuum abdestilliert.

Das so funktionalisierte Siliziumpulver wird in 100 ml Styrol mit Hilfe eines Ultraschall-Erzeugers dispergiert, und der Dispersion werden nacheinander 5 g Divinylbenzol und 5 g Dibenzoylperoxid zugegeben. Die Suspension wird unter Rühren in einem siedenden Wasserbad für 30 Minuten erwärmt, in eine Form gegossen und abgekühlt.

100 g des entstandenen Feststoffs werden anschließend zerkleinert und in einem Rundkolben mit 200 ml konzentrierter Schwefelsäure versetzt. Die Suspension wird unter starkem Rühren für 30 Minuten auf 160 °C erhitzt, abgekühlt und filtriert.

Der Filterrückstand wird in einen Rohrofen überführt und unter Stickstoff für 3 Stunden bei 750 °C pyrolysiert.

Das so erhaltene Material wird nachfolgend, gegebenenfalls zusammen mit einem Bindemittel und gegebenenfalls zusammen mit Graphit und/oder Leit-Rußen, zu Anoden für Lithium-Ionenbatterien weiterverarbeitet.

In vergleichbarer Weise werden auch Silizium/Zinn-basierte bzw. zinnbasierte Anodenmaterialien hergestellt, wobei in Abweichung zu dem vorangehenden Ausführungsbeispiel als Ausgangsmaterialien anstelle von Silizium aus Mikrowellensynthese gewonnenes und oberflächenoxidiertes Silizium/Zinn-Komposit bzw. Zinn eingesetzt wird.

## Patentansprüche

1. Elektrisch leitfähiges, poröses silizium- und/oder zinnhaltiges Kohlenstoffmaterial, insbesondere für die Herstellung eines Anodenmaterials, bevorzugt für Lithium-Ionenbatterien, wobei das silizium- und/oder zinnhaltige Kohlenstoffmaterial in eine poröse Kohlenstoffmatrix eingelagerte Silizium-, Zinn- und/oder Silizium/Zinn-Nanopartikel enthält, wobei das Kohlenstoffmaterial eine Porosität, bestimmt als Gesamtporenvolumen nach Gurvich, im Bereich von 0,1 bis 0,3 cm³/g und eine BET-Oberfläche von 50 bis 200 m²/g aufweist

2. Kohlenstoffmaterial nach Anspruch 1, **dadurch gekennzeichnet,**
**dass** der molare Gehalt an Silizium und/oder Zinn bzw. molare Gehalt an Silizium-, Zinn- und/oder Silizium/Zinn-Nanopartikeln 5 bis 90 Mol-%, insbesondere 10 bis 80 Mol-%, vorzugsweise 20 bis 70 Mol-%, bezogen auf das Kohlenstoffmaterial, beträgt; und/oder
**dass** der volumenbezogene Gehalt an Silizium und/oder Zinn bzw. der volumenbezogene Gehalt an Silizium-, Zinn- und/oder Silizium/Zinn-Nanopartikeln 1 bis 60 Vol.-%, insbesondere 2 bis 50 Vol.-%, vorzugsweise 5 bis 40 Vol.-%, bezogen auf das Kohlenstoffmaterial, beträgt; und/oder
**dass** der massenbezogene Gehalt an Silizium und/oder Zinn bzw. der massenbezogene Gehalt an Silizium-, Zinn- und/oder Silizium/Zinn-Nanopartikeln 1 bis 70 Gew.-%, insbesondere 2 bis 60 Gew.-%, vorzugsweise 5 bis 50 Gew.-%, bezogen auf das Kohlenstoffmaterial, beträgt

3. Kohlenstoffmaterial nach Anspruch 1 oder 2, enthaltend außerdem Graphit, insbesondere in molaren Mengen von 1 bis 50 Mol-%, bevorzugt 5 bis 40 Mol-%, bezogen auf das Kohlenstoffmaterial, und/oder insbesondere in gewichtsbezogenen Mengen von 0,001 bis 50 Gew.-%, insbesondere 0,01 bis 45 Gew.-%, vorzugsweise 0,1 bis 40 Gew.-%, besonders bevorzugt 1 bis 40 Gew.-%, bezogen auf das Kohlenstoffmaterial, insbesondere wobei der Graphit mittlere Teilchengrößen (D50) im Bereich von 0,1 bis 200 µm, insbesondere 1 bis 100 µm, aufweist und/oder insbesondere wobei der Graphit eine BET-Oberfläche von 1 bis 75 m²/g, insbesondere 2 bis 50 m²/g, vorzugsweise 5 bis 30 m²/g, besonders bevorzugt 10 bis 20 m²/g, aufweist

4. Kohlenstoffmaterial nach einem der vorangehenden Ansprüche, enthaltend außerdem mindestens einen Leitfähigkeitsverbesserer, insbesondere einen Leit-Ruß, insbesondere in molaren Mengen von 1 bis 20 Mol-%, bevorzugt 3 bis 10 Mol-%, bezogen auf das Kohlenstoffmaterial, und/oder insbesondere in gewichtsbezogenen Mengen von 0,001 bis 20 Gew.-%, insbesondere 0,01 bis 15 Gew.-%, vorzugsweise 0,1 bis 10 Gew.-%, bezogen auf das Kohlenstoffmaterial, insbesondere wobei der Leitfähigkeitsverbesserer mittlere Teilchengrößen (D50) im Bereich von 1 bis 100 nm, insbesondere 20 bis 60 nm, bevorzugt 30 bis 50 nm, aufweist und/oder insbesondere wobei der Leitfähigkeitsverbesserer eine BET-Oberfläche von 10 bis 200 m²/g, insbesondere 50 bis 80 m²/g, vorzugsweise 55 bis 70 m²/g, aufweist.

5. Kohlenstoffmaterial nach einem der vorangehenden Ansprüche, **gekennzeichnet durch** eine elektrische Leitfähigkeit im Bereich von 10⁰ bis 10⁶ S/m, insbesondere 5 • 10⁰ bis 10⁵ S/m, und/oder **gekennzeichnet durch** eine Leitfähigkeit von mindestens 10⁰ S/m, insbesondere mindestens 10³ S/m, vorzugsweise mindestens 10⁴ S/m.

6. Verwendung eines Kohlenstoffmaterials nach den vorangehenden Ansprüchen als Anodenmaterial, insbesondere für Lithium-Ionenbatterien, und/oder zur Herstellung eines Anodenmaterials insbesondere für Lithium-Ionenbatterien.

7. Anodenmaterial, enthaltend ein Kohlenstoffmaterial nach den vorangehenden Ansprüchen.

8. Batterie, insbesondere Lithium-Ionenbatterie, vorzugsweise in Form eines Akkumulators, umfassend ein Anodenmaterial nach dem vorangehenden Anspruch und/oder umfassend ein Kohlenstoffmaterial nach den vorangehenden Ansprüche.

## Claims

1. An electrically conductive, porous silicon-containing and/or tin-containing carbon material, in particular for the production of an anode material, preferably for lithium ion batteries, wherein the silicon-containing and/or tin-containing carbon material contains silicon, tin and/or silicon/tin nanoparticles intercalated into a porous carbon matrix, wherein the carbon material has a porosity, determined as the Gurvich total pore volume, in the range 0.1 to 0.3 cm³/g and a BET specific surface area of 50 to 200 m²/g.

2. The carbon material according to claim 1,
**characterized**
**in that** the molar silicon and/or tin content or molar silicon, tin and/or silicon/tin nanoparticles content is 5 to 90 mol %, in particular 10 to 80 mol %, preferably 20 to 70 mol % with respect to the carbon material; and/or
**in that** the volume-based silicon and/or tin content or the volume-based silicon, tin and/or silicon/tin nanoparticles content is 1 to 60 % by volume, in particular 2 to 50 % by volume, preferably 5 to 40 % by volume with respect to the carbon material; and/or
**in that** the mass-based silicon and/or tin content or the mass-based silicon, tin and/or silicon/tin nanoparticles content is 1 to 70 % by weight, in particular 2 to 60 % by weight, preferably 5 to 50 % by weight with respect to the carbon material.

3. The carbon material according to claim 1 or 2, further containing graphite, in particular in molar quantities of 1 to 50 mol %, preferably 5 to 40 mol % with respect to the carbon material and/or in particular in mass-based quantities of 0.001 to 50 % by weight, in particular 0.01 to 45 % by weight, preferably 0.1 to 40 % by weight, particularly preferably 1 to 40 % by weight with respect to the carbon material, in particular wherein the graphite has a mean particle size (D50) in the range 0.1 to 200 µm, in particular 1 to 100 µm, and/or in particular wherein the graphite has a BET specific surface area of 1 to 75 m²/g, in particular 2 to 50 m²/g, preferably 5 to 30 m²/g, and particularly preferably 10 to 20 m²/g.

4. The carbon material according to any one of the preceding claims, additionally containing at least one conductivity-improving agent, in particular a conductive carbon black, in particular in molar quantities of 1 to 20 mol %, preferably 3 to 10 mol % with respect to the carbon material, and/or in particular in mass-based quantities of 0.001 to 20 % by weight, in particular 0.01 to 15 % by weight, preferably 0.1 to 10 % by weight with respect to the carbon material, in particular wherein the conductivity-improving agent has a mean particle size (D50) in the range 1 to 100 nm, in particular 20 to 60 nm, preferably 30 to 50 nm, and/or in particular wherein the conductivity-improving agent has a specific surface area of 10 to 200 m²/g, in particular 50 to 80 m²/g, preferably 55 to 70 m²/g.

5. The carbon material according to any one of the preceding claims, **characterized by** an electrical conductivity in the range 10⁰ to 10⁶ S/m, in particular 5 • 10⁰ to 10⁵ S/m, and/or is **characterized by** a conductivity of at least 10⁰ S/m, in particular at least 10³ S/m, preferably at least 10⁴ S/m.

6. Use of a carbon material according to any one of the preceding claims, as an anode material, in particular for lithium ion batteries, and/or for the production of an anode material, in particular for lithium ion batteries.

7. Anode material containing a carbon material according to any one of the preceding claims.

8. A battery, in particular a lithium ion battery, preferably in the form of an accumulator, comprising an anode material according to the preceding claim and/or comprising a carbon material according to any one of the preceding claims.

## Revendications

1. Matière poreuse, conductrice d'électricité à base de carbone contenant du silicium et/ou de l'étain, notamment pour la fabrication d'une matière anodique, de préférence pour des batteries aux ions de lithium, la matière à base de carbone contenant du silicium et/ou de l'étain contenant des nanoparticules de silicium, d'étain et/ou de silicium/d'étain intercalées dans une matrice de carbone poreuse, la matière à base de carbone présentant une porosité, déterminée en tant que volume poreux total selon Gurvich dans l'ordre de 0,1 à 0,3 cm³/g et une surface en BET de 50 à 200 m²/g.

2. Matière à base de carbone selon la revendication 1, **caractérisée**
**en ce que** la teneur molaire en silicium et/ou en étain ou la teneur molaire en nanoparticules de silicium, d'étain et/ou de silicium/d'étain est de 5 à 90 % en moles, notamment de 10 à 80 % en moles, de préférence de 20 à 70 % en moles, en rapport à la matière à base de carbone ; et/ou
**en ce que** la teneur rapportée au volume de silicium et/ou d'étain ou la teneur rapportée au volume de nanoparticules de silicium, d'étain et/ou de silicium/d'étain est de 1 à 60 % en volume, notamment de 2 à 50 % en volume, de préférence de 5 à 40 % en volume, en rapport à la matière à base de carbone ; et/ou
**en ce que** la teneur rapportée à la masse de silicium et/ou d'étain ou la teneur rapportée à la masse de nanoparticules de silicium, d'étain et/ou de silicium/d'étain est de 1 à 70 % en poids, notamment de 2 à 60 % en poids, de préférence de 5 à 50 % en poids, en rapport à la matière à base de carbone.

3. Matière à base de carbone selon la revendication 1 ou 2, contenant par ailleurs du graphite, notamment dans des quantités molaires de 1 à 50 % en moles, de préférence de 5 à 40 % en moles, en rapport à la matière à base de carbone et/ou notamment en quantités rapportées au poids de 0,001 à 50 % en poids, notamment de 0,01 à 45 % en poids, de préférence de 0,1 à 40 % en poids, de manière particulièrement préférée de 1 à 40 % en poids en rapport à la matière à base de carbone, notamment le graphite présentant des tailles moyennes de particules (D50) dans l'ordre de 0,1 à 200 µm ; notamment de 1 à 100 µm et/ou notamment le graphite présentant une surface BET de 1 à 75 m²/g, notamment de 2 à 50 m²/g, de préférence de 5 à 30 m²/g, de manière particulièrement préférée de 10 à 20 m²/g.

4. Matière à base de carbone selon l'une quelconque des revendications précédentes, contenant par ailleurs au moins un renforçateur de conductivité, notamment un noir de carbone conducteur, notamment dans des quantités molaires de 1 à 20 % en moles, de préférence de 3 à 10 % en moles, en rapport à la matière à base de carbone, et/ou notamment dans des quantités rapportées au poids de 0,001 à 20 % en poids, notamment de 0,01 à 15 % en poids, de préférence de 0,1 à 10 % en poids en rapport à la matière à base de carbone, notamment le renforçateur de conductivité comportant des tailles moyennes de particules (D50) dans l'ordre de 1 à 100 nm, notamment de 20 à 60 nm, de préférence de 30 à 50 nm et/ou notamment le renforçateur de conductivité présentant une surface BET de 10 à 200 m²/g, notamment de 50 à 80 m²/g, de préférence de 55 à 70 m²/g.

5. Matière à base de carbone selon l'une quelconque des revendications précédentes, **caractérisée par** une conductivité électrique dans l'ordre de 10⁰ à 10⁶ S/m, notamment de 5 • 10⁰ à 10⁵ S/m, et/ou **caractérisée par** une conductivité d'au moins 10⁰S/m, notamment d'au moins 10³ S/m, de préférence d'au moins 10⁴ S/m.

6. Utilisation d'une matière à base de carbone selon les revendications précédentes en tant que matière anodique, notamment pour des batteries aux ions de lithium et/ou pour la fabrication d'une matière anodique, notamment pour des batteries aux ions de lithium.

7. Matière anodique contenant une matière à base de carbone selon les revendications précédentes.

8. Batterie, notamment batterie aux ions de lithium, de préférence sous la forme d'un accumulateur, comprenant une matière anodique selon les revendications précédentes et/ou comprenant une matière à base de carbone selon les revendications précédentes.
